## Europäisches Patentamt

## European Patent Office

## Office européen des brevets

(11) Publication number: **0 106 558**
**B1**

# EUROPEAN PATENT SPECIFICATION

(45) Date of publication of patent specification: **29.07.87**

(21) Application number: **83305549.4**

(22) Date of filing: **21.09.83**

(51) Int. Cl.⁴: **A 01 N 47/38,** A 01 N 57/14 // (A01N47/38, 37:32),(A01N57/14, 47:38)

(54) **Fungicidal mixtures.**

(30) Priority: **22.09.82 GB 8227029**
**22.09.82 GB 8227032**

(43) Date of publication of application:
**25.04.84 Bulletin 84/17**

(45) Publication of the grant of the patent:
**29.07.87 Bulletin 87/31**

(84) Designated Contracting States:
**AT BE CH DE FR GB IT LI LU NL SE**

(56) References cited:
**FR-A-2 257 598**
**FR-A-2 516 350**

**C.R. WORTHING: "The Pesticide Manual", 6th edition, 1979, pages 436+77, B.C.P.C. Publications Croydon, GB**

(73) Proprietor: **SCHERING AGROCHEMICALS LIMITED**
**Hauxton Cambridge CB2 5HU (GB)**

(72) Inventor: **Barnes, Geoffrey**
**90 Cambridge Road**
**Great Shelford Cambridge (GB)**

(74) Representative: **Waldman, Ralph David et al**
**Schering Agrochemicals Limited Industrial Property Department Chesterford Park Research Station**
**Saffron Walden Essex CB10 1XL (GB)**

Courier Press, Leamington Spa, England.

# 0 106 558

**Description**

This invention relates to compositions with useful fungicidal properties.

The present invention provides a fungicidal composition comprising:

a) prochloraz and

b) tolclofos-methyl

Prochloraz is a known fungicide and is the approved common name for 1-[N-propyl-N-2-(2,4,6-trichlorophenoxy)-ethylcarbamoyl]imidazole, and that name is used in the specification to also include salts and metal complexes of this compound. Tolclofos-methyl is the common name for 0-2,6-dichloro-p-tolyl 0,0-dimethyl phosphorodithioate.

We have found that the compositions of the invention have advantageous properties over the individual components and that synergism is often demonstrated, and yield of crop may be increased.

The ratios of the prochloraz to tolclofos-methyl may vary over a wide range but are usually in the range 10:1 to 1:5. These ratios are based on the weights of the free base.

In addition other pesticides may be employed in conjunction with the active ingredients described above providing they do not adversely effect the interaction between the fungicidal components. For example it is sometimes useful to include additional fungicides, e.g. bupirimate, which extend the range of activity in order to control a wider spectrum of fungi.

The compositions of the invention are active against a wide range of fungi, e.g. powdery mildew (*Erysiphe graminis*) on cereal crops such as wheat, barley, oats and rye and other foliar diseases such as glume blotch (*Septoria nodorum*), leaf blotch (*Rhynchosporium secalis*), eyespot (*Pseudocercosporella herpotrichoides*) and rust (e.g. *Puccinia graminis*). Certain compositions of the present invention can be used to control seed borne organisms such as bunt (*Tilletia caries*) on wheat, loose smut (*Ustilago nuda* and *Ustilago hordei*) on barley and oats, leaf spot (*Pyrenophora avenae*) on oats and leaf stripe (*Pyrenophora graminis*) on barley. The compositions can also be applied to rice for control of rice blast (*Pyricularia oryzae*), to horticultural crops such as apple trees for the control of apple scab (*Venturia inaequalis*), roses and other ornamentals for the control of powdery mildew (*Sphaerotheca pannosa*) rust and black spot, cucurbits for ths control of *Botrytis cinerea*, turf for the control of dollar spot (*Sclerotinia homeocarpa*) and to stored produce for the control of storage rot organisms of citrus fruit, potatoes, sugar beet, apples, pears, etc., (e.g. *Penicillium spp., Aspergillus spp.* and *Botrytis spp.*). Other diseases that may be combated include *Helminthosporium spp.* and when using tolclofos-methyl soil born diseases such as 'Rhizoctonia solani* e.g. on potatoes.

Metal complexes of prochloraz are described to our British Patent 1,567,521 and a particularly preferred complex is that formed with manganous chloride in which the molar ratio of prochloraz to manganese is 4:1. However, generally, the prochloraz is present as the free base. The compositions of the invention may be employed in many forms and are often most conveniently prepared in aqueous form immediately prior to use. One method of preparing such a composition is referred to as "tank mixing" in which the fungicidal ingredients in their commercially available form are mixed together by the user in a quantity of water.

In addition to tank mixing immediately prior to use the compositions containing prochloraz and component (b) may be formulated into a more concentrated primary composition which is diluted with water or other diluent before use. Such compositions may comprise a surface active agent in addition to the active ingredients and examples of such compositions are as follows.

It can be a dispersible solution which comprises the active ingredients dissolved in a water-miscible solvent with the addition of a dispersing agent. Alternatively it can comprise the ingredients in the form of a finely ground powder in association with a dispersing agent and intimately mixed with water to give a paste or cream which can if desired be added to an emulsion of oil in water to give a dispersion of active ingredients in an aqueous oil emulsion.

An emulsifiable concentrate comprises the active ingredient dissolved in a water-immiscible solvent which is formed into an emulsion with water in the presence of an emulsifying agent.

A granular solid comprises the active ingredients associated with powder diluents such as kaolin, which mixture is granulated by known methods. Alternatively it comprises the active ingredients adsorbed or absorbed on a pre-granular diluent, for example Fuller's earth, attapulgite or limestone grit.

A dispersible or wettable powder usually comprises the active ingredients in admixture with a suitable surfactant and an inert powder diluent such as china clay.

Another suitable concentrate is a flowable suspension concentrate which is formed by grinding the active ingredients with water, a wetting agent and a suspending agent.

In some circumstances it may be desirable to combine two types of formulation e.g. one of the components is present in an emulsifiable concentrate and the second components is dispersed as a powder in this concentrate.

The concentration of the active ingredients (when used as the sole active components) in a composition for direct application to the crop by conventional ground methods is preferably within the range of 0.001 to 10 per cent by weight of the composition, especially 0.005 to 5 per cent by weight, but more concentrated compositions containing up to 40 per cent may be desirable in the case of aerial sprays.

As a further aspect, the invention includes a method for controlling a phytopathogenic fungus which

2

comprises applying to seeds, plants and other vegetative material or their habitat prochloraz and tolclofos-methyl either together or in sequence. Preferably, they are applied directly at the time of drilling of seeds as that the active composition controls the growth of fungi which attack the seed. A suitable application rate is within the range of from 0.025 to 10 kilogram per hectare, more preferably from 0.04 to 5.0 kilogram per hectare.

Alternatively the composition of the invention can be applied directly to plants by, for example, spraying or dusting either at the time which the fungus has begun to appear on the plant or before the appearance of fungus, as a protective measure. In both cases the preferred mode of application is by foliar spray. It is generally important to obtain good control of fungi in the early stages of plant growth as this is the time when the plant can be most severely damaged. For cereal crops such as wheat, barley and oats it is often desirable to spray the plant at or before growth stage 6 (Feeke's scale), although additional treatments when the plant is more mature can augment resistance to the growth or spread of fungi. It may also sometimes be useful to treat the roots of a plant before or during planting, for example, by dipping the roots in a suitable liquid or solid composition. When the composition of the invention is applied directly to the plant a suitable rate of application is from 0.05 to 5 kilograms per hectare, preferably from 0.25 to 1.5 kilogram per hectare.

In a further method of the invention the composition of the invention can be applied to the seed in order to combat seed-borne diseases. This method is of particular use in the treatment of cereal grain against attack by, for example, leaf spot of oats, leaf stripe or barley, loose smut of barley, loose smut of oats, and bunt of wheat. If cereal grain is to be stored in a store room or container it is sometimes convenient to treat the store room or containers with a composition according to the invention instead of, or in addition to, treatment of the cereal grain itself. A suitable rate of application for a seed dressing is from 0.02 to 1.0 g per kilogram of seed, such as for example from 0.05 to 0.25 g per kilogram of seed.

A particular method of the invention is one for controlling foliar diseases on a cereal crop, such as for example wheat, barley, oats or rye which comprises applying a composition of the invention to the crop. Preferable the mode of application is by foliar spray of the growing crop.

The invention is illustrated in the following Examples which describe *in vitro* experiments in which a synergistic effect was observed.

Example 1

Aqueous suspensions prepared from a commercially available formulation of prochloraz and a commercially available formulation containing tolclofos-methyl were prepared and incorporated into agar in amounts to give the required concentration of active ingredient in the agar. The molten agar was then poured into 9 cm. Petri dishes and allowed to set. The agar in each dish was inoculated with an agar culture of *Botrytis cinerea* and the dishes were incubated at 20°C for seven days. The colony diameters were then measured and the amount of growth expressed as a percentage of the growth observed with a control calculated. The observed growth as a percentage of control is shown in Table I.

TABLE I

| Concentration of Prochloraz (ppm) | Concentration of Tolclofos-methyl (ppm) | Observed growth as percentage of control | Expected growth as percentage of control ($E_1$) |
|---|---|---|---|
| 50 | 0 | 92.1 | |
| 100 | 0 | 83.5 | |
| 0 | 5 | 61.3 | |
| 0 | 10 | 59.8 | |
| 50 | 5 | 18.0 | 56.5 |
| 100 | 10 | 0 | 49.9 |

To indicate the existence of synergism between the active components the results were treated in the manner described by Colby S. R. (1967 Calculating Synergistic and Antagonistic Responses of Herbicide Combinations. Weeds *15*, 20—22). The calculated values of $E_1$ the expected growth as a percentage of control was calculated from the equation

$$E_1 = \frac{X_1 Y_1}{100}$$

wherein $X_1$ is the growth as a percentage of control of prochloraz at a given concentration when used alone and $Y_1$ is the growth as a percentage of control with tolclofos-methyl at a given concentration when used alone. If the observed growth is less than $E_1$ the results indicate synergism. In the Table above the results with the mixture do show evidence of synergism.

Example 2

Aqueous suspensions of prochloraz and technical grade tolclofos-methyl were prepared and used in agar plate experiments in a similar manner to that described in Example 1 except that a culture of *Alternaria brassicae* was used. The results obtained are shown below in Table II.

TABLE II

| Concentration of Prochloraz (ppm) | Concentration of tolclofos-methyl | Observed growth as percentage of control | Expected growth as percentage of control (E₁) |
|---|---|---|---|
| 100 | 0 | 34.7 | |
| 0 | 50 | 66.7 | |
| 100 | 50 | 17.6 | 23.1 |

**Claims**

1. A fungicidal composition comprising:
a) prochloraz, its salts or complexes with metal salts and
b) tolclofos-methyl.
2. A composition according to claim 1 wherein the ratio of the prochloraz to tolclofos-methyl is in the range 10:1 to 1:5 based on the weight of the free base.
3. A method for controlling a phytopathogenic fungus which comprises applying to seeds, plants and other vegetative material or their habitat.
a) prochloraz, its salts or complexes with metal salts and
b) tolclofos-methyl.
either together or in sequence.

**Patentansprüche**

1. Fungizide Mischung, bestehend aus
a) Prochloraz, dessen Salze oder Komplexe mit Metallsalzen und
b) Tolclofos-methyl.
2. Mischung gemäß Anspruch 1, dadurch gekennzeichnet, daß das Verhältnis von Frochloraz zu Tolclofos-methyl im Bereich von 10:1 bis 1:5 liegt, bezogen auf das Gewicht der freien Base.
3. Methode zur Bekämpfung von phytopathogenen Filzen durch Anwendung auf Saatgut, Pflanzen und andere Vegetationsformen oder ihren Standort von
a) Prochloraz, dessen Salze oder Komplexe mit Metallsalzen und
b) Tolclofos-methyl, entweder zusammen oder nacheinander.

**Revendications**

1. Composition fongicide comprenant
a) du prochloraz, ses sels ou complexes avec des sels métalliques, et
b) du tolclofos-méthyl.
2. Composition suivant la revendication 1, dans laquelle le rapport du prochloraz au tolclofosméthyl se situe dans l'invervalle de 10:1 à 1:5, sur base du poids de la base libre.
3. Procédé pour combattre un champignon phytopathogène qui comprend l'application, sur les semences, les plantes ou d'autres matières végétatives ou sur leur habitat
a) de prochloraz, de ses sels ou complexes avec des sels métalliques, et
b) de tolclofos-méthyl ensemble ou bien en succession.